# EUROPEAN PATENT SPECIFICATION

(11) **EP 2 808 979 B1**
(45) Date of publication and mention of the grant of the patent: **30.06.2021**
(21) Application number: 12866977.7
(22) Date of filing: 26.01.2012
(51) Int. Cl.: H02J 50/12

(54) **POWER TRANSMITTING APPARATUS AND POWER TRANSMITTING METHOD**
LEISTUNGSÜBERTRAGUNGSVORRICHTUNG UND LEISTUNGSÜBERTRAGUNGSVERFAHREN
APPAREIL DE TRANSMISSION DE COURANT ET PROCÉDÉ DE TRANSMISSION DE COURANT

(43) Date of publication of application: 03.12.2014
(73) Proprietor: Pioneer Corporation, Tokyo 113-0021 (JP)
(72) Inventor: IWAWAKI, Keisuke, Kawasaki-shi Kanagawa 212-0031 (JP)
(74) Representative: Viering, Jentschura & Partner mbB Patent- und Rechtsanwälte
(86) International application number: PCT/JP2012/051690
(87) International publication number: WO 2013/111307

(56) References cited:
- WO-A2-2010/014634
- JP-A- 2002 078 247
- JP-A- 2009 268 181
- JP-A- 2012 005 238
- US-A1- 2007 176 494
- US-A1- 2010 181 961
- None

## Description

### Technical Field

The present invention relates to a power transmitting apparatus and a power transmitting method which transmit and receive electric power in a wireless manner by electromagnetic induction.

### Background Art

As this type of apparatus, for example, there is proposed an apparatus in which the capacitance and operating frequency of a resonance capacitor are set such that the power factor of inverter output approaches one while a distance and a coupling coefficient between a primary coil and a secondary coil are in a standard state (refer to Patent document 1).

### Prior Art Document

### Patent Document

Patent document 1: Japanese Patent Application Laid Open No. 2000-245077

Moreover, the following prior art documents are mentioned: US 2010 / 181 961 A1; US 2007 / 176 494 A1; and WO 2010 / 014 634 A2.

### Summary of Invention

It is noted that the invention is defined by the independent claims. Embodiments that are more detailed are defined by the respective dependent claims.

### Subject to be Solved by the Invention

In the aforementioned Background Art, however, if the distance between the primary coil and the secondary coil deviates from that in the standard state, a phase difference between voltage and current deviates from that in the standard state, and noise and power loss caused by the noise likely increase, which are technically problematic.

In view of the aforementioned problems, it is therefore an object of the present invention to provide a power transmitting apparatus and a power transmitting method in which power transmission can be appropriately performed even if the distance between the primary coil and the secondary coil changes.

### Means for Solving the Subject

The above object of the present invention can be solved by a power transmitting apparatus comprising a first coil and configured to transmit electric power in a wireless manner to a second coil disposed opposite to and at a distance from the first coil, said power transmitting apparatus further is provided with a first conversion circuit unit configured to convert direct current voltage inputted to said power transmitting apparatus to alternating current voltage; a first capacitor unit electrically connected in series with the first coil; a second capacitor unit electrically connected in parallel with the first coil; and a control unit configured to control electrical characteristics of the second capacitor unit on the basis of electrical characteristics of the first conversion circuit unit.

According to the power transmitting apparatus of the present invention, the power transmitting apparatus is provided with a first coil, a first conversion circuit unit, a first capacitor unit, a second capacitor unit, and a control unit.

The first coil is disposed opposite to and at a distance from a second coil. If high-frequency voltage is applied to the first coil when the power transmitting apparatus is driven, induced electromotive force caused by the high-frequency voltage applied to the first coil is generated in the second coil. As a result, the power transmitting apparatus can transmit electric power in a wireless manner to the second coil via the first coil.

The first conversion circuit unit converts direct current (DC) voltage inputted to the power transmitting apparatus to alternating current (AC) voltage (typically high-frequency AC voltage). The AC voltage outputted from the first conversion circuit unit is supplied to the first coil.

The first capacitor unit is typically disposed between the first coil and the first conversion circuit unit, and is electrically connected in series with the first coil. On the other hand, the second capacitor unit is typically disposed between the first coil and the first conversion circuit unit, and is electrically connected in parallel with the first coil.

Here, according to the study of the present inventor, the following matter has been found; namely, in a wireless power feeding (or charging) system for wirelessly charging a battery mounted on an electric vehicle, typically, a power-transmitting-side apparatus (corresponding to the power transmitting apparatus of the present invention) is fixed to the ground or the like, and a power receiving apparatus having a power-receiving-side coil, which is disposed on the bottom of the electric vehicle and which is electrically connected to the battery, is mounted on the electric vehicle. Here, in many cases, for example, the capacitance, operating frequency and the like of a resonance capacitor of the power-transmitting-side apparatus are determined such that the power factor of the inverter output of the power-transmitting-side apparatus approaches one after the setting of a distance between a power transmitting side coil and the power and the power-receiving-side coil. Moreover, the capacitance of a partial resonance capacitor for reducing noise caused by the rise and fall of an inverter is also determined in many cases.

By the way, vehicle height of the electric vehicle varies, for example, depending on the type of the vehicle. Thus, there is a possibility that the actual distance between the power transmitting side coil and the power-receiving-side coil deviates from a set value determined in advance. As a result, if no measures are taken, for example, a phase difference between output voltage and output current of the inverter likely deviates from a set value, and the noise caused by the rise and fall of the inverter and the power loss caused by the noise likely increase.

In the present invention, however, the electrical characteristics of the second capacitor unit are controlled by the control unit which is provided with, for example, a memory, a processor and the like, on the basis of the electrical characteristics of the first conversion circuit unit.

Specifically, for example, the control unit reduces capacitance of the second capacitor unit as the electrical characteristics of the second capacitor unit, with decreasing absolute value of an output current value of the first conversion circuit unit at rise or fall of output voltage of the first conversion circuit unit as the electrical characteristics of the first conversion circuit unit. Alternatively, the control unit controls the electrical characteristics of the second capacitor unit according to a phase difference between output voltage and output current of the first conversion circuit unit as the electrical characteristics of the first conversion circuit unit.

As a result, the power transmitting apparatus can suppress the noise caused by the rise and fall of the inverter and the occurrence of the power loss caused by the noise even if the distance between the first coil and the second coil changes. Therefore, according to the power transmitting apparatus of the present invention, the power transmission can be appropriately performed even if the distance between the first coil and the second coil changes.

The above object of the present invention can be solved by a power transmitting method in a power transmitting apparatus comprising a first coil and configured to transmit electric power in a wireless manner to a second coil disposed opposite to and at a distance from the first coil, said power transmitting apparatus is provided with a first conversion circuit unit configured to convert direct current voltage inputted to said power transmitting apparatus to alternating current voltage; a first capacitor unit electrically connected in series with the first coil; and a second capacitor unit electrically connected in parallel with the first coil, said power transmitting method is provided with a control process of controlling electrical characteristics of the second capacitor unit on the basis of electrical characteristics of the first conversion circuit unit.

According to the power transmitting method of the present invention, as in the power transmitting apparatus of the present invention, the power transmission can be appropriately performed even if the distance between the first coil and the second coil changes.

Incidentally, even the power transmitting method of the present invention can adopt the same various aspects as those of the power transmitting apparatus of the present invention described above.

The operation and other advantages of the present invention will become more apparent from embodiments explained below.

### Brief Description of Drawings

[FIG. 1] FIG. 1 is a block diagram illustrating a configuration of a power transmitting apparatus in a first embodiment.
[FIG. 2] FIGs. 2 are conceptual views for explaining a soft switching operation.
[FIG. 3] FIGs. 3 are conceptual views illustrating a relation between inverter voltage and inverter current for each inter-coil gap.
[FIG. 4] FIG. 4 is a diagram illustrating one example of frequency characteristics of a phase angle between voltage and current.
[FIG. 5] FIG. 5 is a diagram illustrating one example of the measured values of voltage, current and switching signals.
[FIG. 6] FIG. 6 is a diagram illustrating another example of the measured values of voltage, current and switching signals.
[FIG. 7] FIG. 7 is a diagram illustrating another example of the measured values of voltage, current and switching signals.
[FIG. 8] FIG. 8 is a block diagram illustrating a configuration of a power transmitting apparatus in a second embodiment.
[FIG. 9] FIG. 9 is a diagram illustrating one example of a map for determining a relation between the absolute value of an inverter current value and the capacitance of a partial resonance capacitor.
[FIG. 10] FIG. 10 is a block diagram illustrating a configuration of a power transmitting apparatus in a modified example of the second embodiment.

### Modes for Carrying Out the Invention

Hereinafter, embodiments of the power transmitting apparatus of the present invention will be explained with reference to the drawings.

### <First Embodiment>

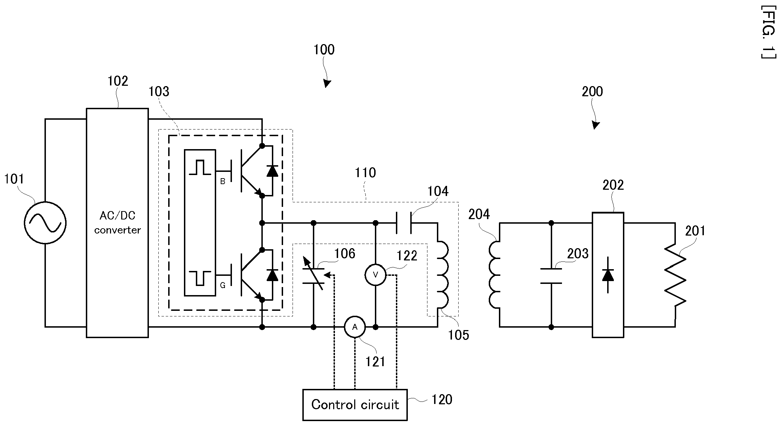

A first embodiment of the power transmitting apparatus of the present invention will be explained with reference to FIG. 1 to FIG. 7.

A configuration of the power transmitting apparatus in the first embodiment will be explained with reference to FIG. 1. FIG. 1 is a block diagram illustrating the configuration of the power transmitting apparatus in the first embodiment.

In FIG. 1, a power transmitting apparatus 100 is provided with an alternating current (AC) power supply 101, a converter 102, an inverter 103, a resonance capacitor 104, a primary (or power feeding) coil 105, a partial resonance capacitor 106, a control circuit 120, a current sensor 121 and a voltage sensor 122.

The converter 102 converts AC voltage outputted from the AC power supply 101 such as, for example, a home power supply and a commercial power supply, to direct current (DC) voltage. Here, the converter 102 has a function for variably adjusting the output voltage or output current according to the amount of transmission power required.

The inverter 103 converts the DC voltage outputted from the converter 102 to high-frequency AC voltage. The inverter 103 constitutes a current resonance inverter 110 with the resonance capacitor 104 and the primary coil 105. The inverter 103 may be, for example, a half bridge inverter or a full bridge inverter.

Particularly, the partial resonance (or voltage resonance) capacitor 106 is electrically connected to the power transmitting apparatus 100. By discharging and charging the partial resonance capacitor 106 at the rise and fall of inverter voltage, it is possible to reduce a slope (dv/dt) of each of rise output and fall output of the inverter voltage and to reduce the noise at the rise and fall of the inverter voltage.

Operating frequency of the current resonance inverter 110 is set to be higher than resonance frequency of the primary coil 105 (i.e. of a series resonance circuit provided with the primary coil 105 and the resonance capacitor 104). In other words, the current resonance inverter 110 is driven in a frequency region higher than the resonance frequency of the primary coil 105 (or in an inductance region). This causes soft-switching of zero current and zero voltage, and makes it possible to significantly reduce switching loss of the inverter 103.

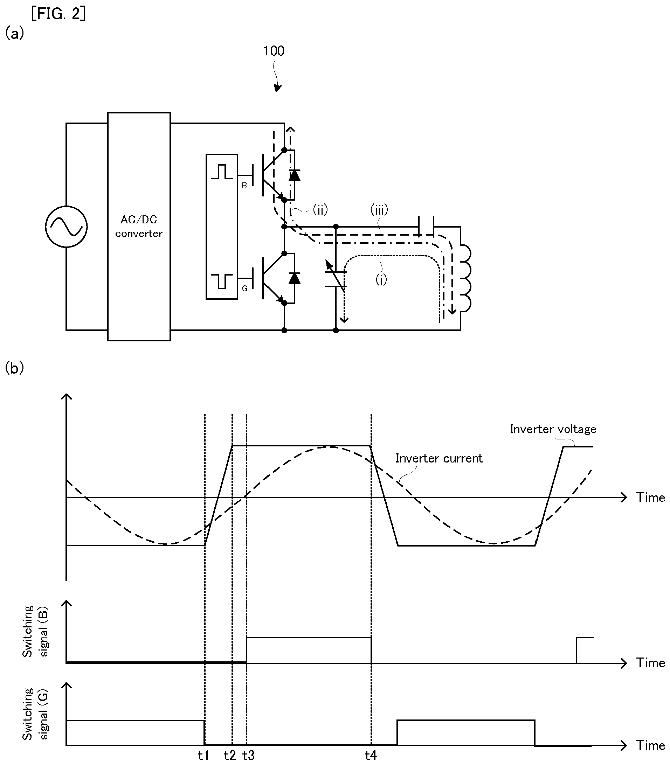

Now, the soft-switching will be explained with reference to FIGs. 2. FIGs. 2 are conceptual views for explaining the soft switching operation.

As described above, the current resonance inverter 110 is driven in the inductance region, and thus, the phase of inverter current is delayed with respect to the inverter voltage as illustrated in an upper portion of FIG. 2(b). In a period from a time point t1 to a time point t2 (i.e. in a dead time of the switching), voltage resonance occurs between the current resonance inverter 110 and the partial resonance capacitor 106 (refer to a dotted line arrow (i) in FIG. 2(a)).

As a result, for example, at a timing (or a time point t3) at which a switch on a high (B) side of the inverter 103 is turned on (refer to a switching signal (B)), the voltage of both ends of the switch is zero and the current is zero. This makes it possible to suppress the noise and the loss caused by the switching.

In a period from the time point t2 to the time point t3, return current flows toward the AC power supply 101, as illustrated in an alternate long and short dashed line arrow (ii) in FIG. 2(a). Due to the return current, the noise and the loss caused by the switching occur. Moreover, in a period from the time point t3 to a time point 9 t4, the current flows as illustrated in a dashed line arrow (iii) in FIG. 2(a).

Back in FIG. 1 again, a power-receiving-side apparatus 200 is provided with a load 201 such as, for example, a battery, a rectifier circuit 202, a secondary resonance capacitor 203 and a secondary (or power receiving) coil 204. The power-receiving-side apparatus 200 is mounted, for example, on an electric vehicle or the like.

When high-frequency voltage is applied to the primary coil 105, induced electromotive force caused by the high-frequency voltage applied to the primary coil 105 is generated in the secondary coil 204. The rectifier circuit 202 converts the high-frequency power outputted from the secondary coil 204 to DC.

Incidentally, the "primary coil 105", the "secondary coil 204", the "inverter 103", the "resonance capacitor 104", the "partial resonance capacitor 106" and the "current resonance inverter 110" are one example of the "first coil", the "second coil", the "first conversion circuit unit", the "first capacitor unit", the "second capacitor unit" and the "second conversion circuit unit" of the present invention, respectively.

Conventionally, a distance between the primary coil 105 and the secondary coil 204 (i.e. an inter-coil gap) is set, and the capacitance and operating frequency or the like of the resonance capacitor 104 are determined such that the power factor of inverter output approaches one at the set distance, and the capacitance of the partial resonance capacitor 106 for reducing the noise is determined as a fixed value in many cases.

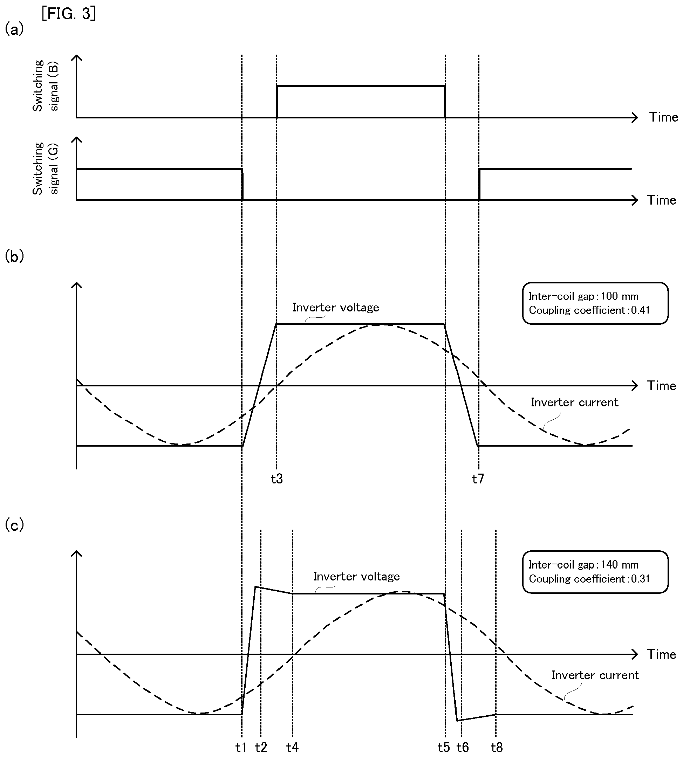

More specifically, the capacitance of the partial resonance capacitor 106 is determined to provide optimal voltage resonance (in other words, not to generate the return current) in a period from the time point t1 to the time point t3, and a period from a time point t5 to a time point t7 in FIG. 3(b).

If, however, the distance between the primary coil 105 and the secondary coil 204 deviates from a set value, a phase difference between the inverter voltage and the inverter current changes, for example, as illustrated in FIG. 3(c). Then, the slope (dv/dt) of each of the rise and fall of the inverter voltage (i.e. dv/dt associated with the voltage resonance) becomes steep, and the return current increases (in FIG. 3(c), the return current flows in a period from the time point t2 to the time point t4, and a period from a time point t6 to a time point t8). This results in an increase in the noise and the power loss caused by the noise.

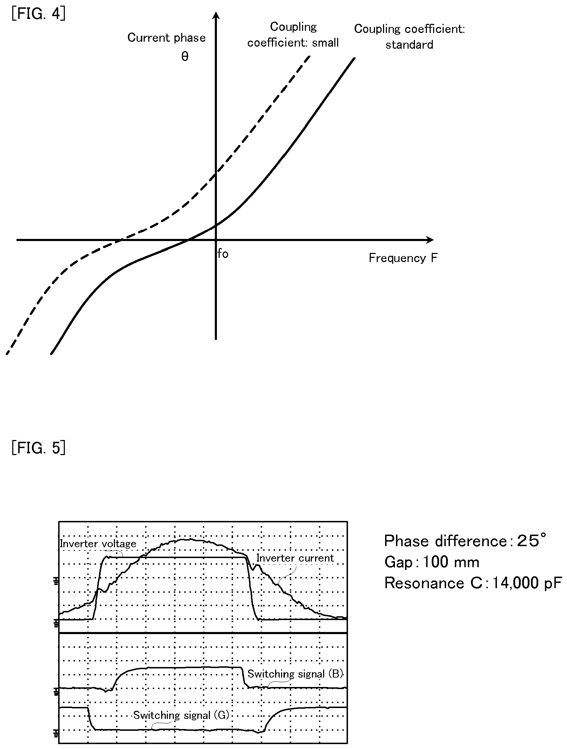

Incidentally, as the inter-coil gap increases (i.e. as the coupling coefficient decreases), the phase of the inverter current increases (i.e. the phase of the inverter current is delayed from the phase of the inverter voltage) (refer to FIG. 4).

In the embodiment, however, the partial resonance capacitor 106 is constructed from a variable capacitor such as, for example, a varicap (refer to FIG. 1). The control circuit 120 obtains the phase difference between the inverter voltage and the inverter current from the output of each of the current sensor 121 and the voltage sensor 122, and controls the capacitance of the partial resonance capacitor 106 according to the obtained phase difference.

Specifically, the control circuit 120 controls the capacitance of the partial resonance capacitor 106 such that the capacitance of the partial resonance capacitor 106 increases as the inverter current is further delayed from the inverter voltage (i.e. as the phase delay increases).

As a result, it is possible to suppress the slope (dv/dt) of each of the rise and fall of the inverter voltage caused by a change in the inter-coil gap, and the return current. It is therefore possible to perform the power transmission while suppressing the deterioration of the slope (dv/dt) of each of the rise and fall of the inverter voltage and suppressing the noise caused by the return current and the power loss caused by the noise.

Now, the effect of the power transmitting apparatus 100 in the embodiment will be explained more specifically with reference to FIG. 5 to FIG. 7. FIG. 5 to FIG. 7 are diagrams illustrating one example of the measured values of the voltage, the current and the switching signals.

Firstly, it is assumed that the capacitance of the partial resonance capacitor 106 is set to be 14000 picofarads (pF) in a case where the inter-coil gap is 100 mm (in a case where the phase angle between the inverter voltage and the inverter current is 25 degrees). In this case, the waveforms of the inverter voltage and the inverter current are as illustrated in FIG. 5.

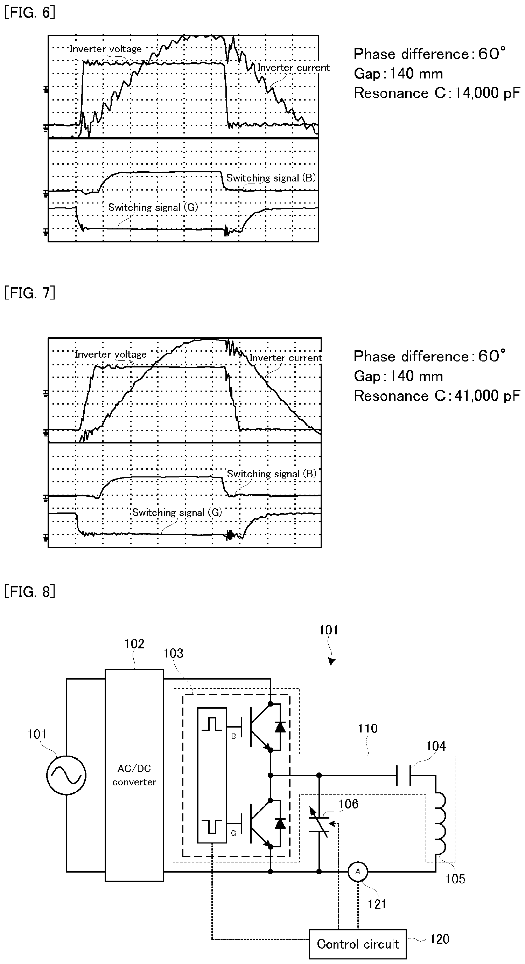

If the inter-coil gap changes to 140 mm in the condition that the capacitance of the partial resonance capacitor 106 is set to be 14000 pF, as illustrated in FIG. 6, the phase angle between the inverter voltage and the inverter current becomes 60 degrees. As illustrated in FIG. 6, the slope of each of the rise and fall of the inverter voltage is steeper than the slope of each of the rise and fall of the inverter voltage illustrated in FIG. 5. In addition, it is clear that the noise of the inverter current significantly increases.

Then, if the capacitance of the partial resonance capacitor 106 is changed from 14000 pF to 41000 pF according to the phase difference between the inverter voltage and the inverter current, the noise of the inverter current can be reduced, as illustrated in FIG. 7.

The "control circuit 120", the "phase difference between the inverter voltage and the inverter current" and the "capacitance of the partial resonance capacitor 106" in the embodiment are one example of the "control unit", the "electrical characteristics of the first conversion circuit unit" and the "electrical characteristics of the second capacitor unit" of the present invention, respectively.

### <Second Embodiment>

A second embodiment of the power transmitting apparatus of the present invention will be explained with reference to FIG. 8. The second embodiment has the same configuration as that of the first embodiment, except that the configuration is partially different. Thus, in the second embodiment, a duplicated explanation of the first embodiment will be omitted, and common parts on the drawings will carry the same reference numerals. Basically, only a different point will be explained with reference to FIG. 8. FIG. 8 is a block diagram illustrating a configuration of the power transmitting apparatus in the second embodiment, to the same effect as in FIG. 1.

As illustrated in FIG. 8, a power transmitting apparatus 150 in the second embodiment does not have the voltage sensor 122 (refer to FIG. 1).

The control circuit 120 compares the switching signal of the inverter 103 with the inverter current indicated by the output of the current sensor 121, thereby detecting the phase difference between voltage and current. The control circuit 120 then controls the capacitance of the partial resonance capacitor 106 according to the detected phase difference between voltage and current.

Specifically, for example, the control circuit 120 detects the phase of the inverter current from an inverter current value at a timing at which a switch on a low (G) side of the inverter 103 is turned off (e.g. refer to the time point t1 in FIG. 3), or a timing at which the switch on the high (B) side of the inverter 103 is turned off (e.g. refer to the time point t5 in FIG. 3).

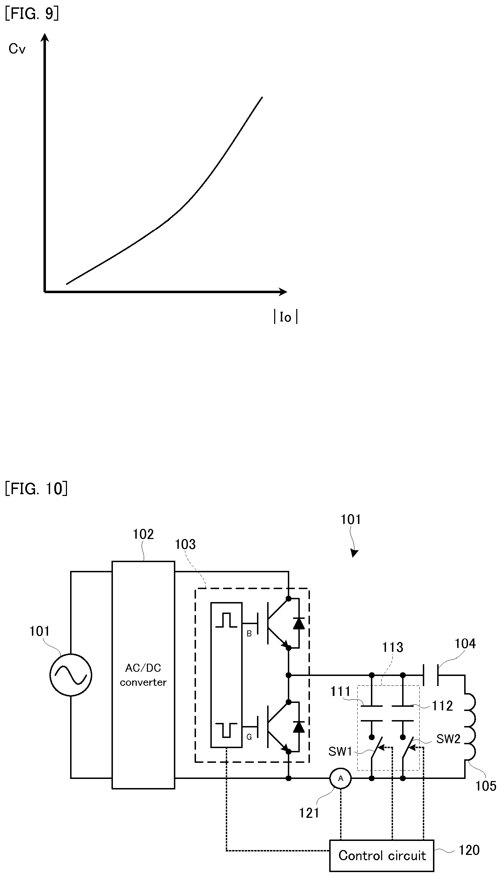

In practice, the control circuit 120 determines the capacitance of the partial resonance capacitor 106, for example, from a function for determining a relation between the inverter current value and the capacitance of the partial resonance capacitor 106, or from a map for determining a relation between the absolute value of the inverter current value and the capacitance of the partial resonance capacitor 106 (refer to FIG. 9), on the basis of the inverter current value at the timing at which the switch on the low (G) side of the inverter 103 is turned off or the timing at which the switch on the high (B) side of the inverter 103 is turned off.

As illustrated in FIG. 9, the capacitance of the partial resonance capacitor 106 increases with increasing absolute value of the inverter current value. That is because the phase angle between voltage and current is further delayed (i.e. the phase delay increases) with respect to the phase of the inverter voltage, with increasing inverter current value at the timing at which the switch on the low (G) side of the inverter 103 is turned off or the timing at which the switch on the high (B) side of the inverter 103 is turned off (e.g. refer to the inverter current value at the time point t1 or the time point t5 in each of FIG. 3(b) and FIG. 3(c)).

### <Modified Example>

A modified example of the power transmitting apparatus 150 in the second embodiment will be explained with reference to FIG. 10. FIG. 10 is a block diagram illustrating a configuration of a power transmitting apparatus in the modified example of the second embodiment.

As illustrated in FIG. 10, in the modified example, instead of the partial resonance capacitor 106 constructed from the variable capacitor, there is provided a partial resonance capacitor unit 113 including a plurality of capacitors 111 and 112 and a plurality of switching elements SW1 and SW2. The "partial resonance capacitor unit 113" in the embodiment is another example of the "second capacitor unit" of the present invention.

The control circuit 120 controls each of the plurality of switching elements SW1 and SW2 on the basis of the inverter current value at the timing at which the switch on the low (G) side of the inverter 103 is turned off or the timing at which the switch on the high (B) side of the inverter 103 is turned off, thereby controlling the capacitance of the partial resonance capacitor unit 113.

### Description of Reference Numerals

- 100, 150: power transmitting apparatus
- 101: alternating current power supply
- 102: converter
- 103: inverter
- 104: resonance capacitor
- 105: primary coil
- 106: partial resonance capacitor
- 110: current resonance inverter
- 111, 112: capacitor
- 113: partial resonance capacitor unit
- 120: control circuit
- 121: current sensor
- 122: voltage sensor
- 200: power receiving side apparatus
- 201: load
- 202: rectifier circuit
- 203: secondary resonance capacitor
- 204: secondary coil

## Claims

1. A power transmitting apparatus (100, 150), which is adapted to transmit electric power in a wireless manner to a second coil (204) of a power receiving apparatus (200), comprising a first coil (105) disposed opposite to and at a distance from the second coil (204), said power transmitting apparatus (100, 150) further comprising:
a first conversion circuit unit, preferentially being an inverter (103), configured to convert direct current voltage inputted to said power transmitting apparatus (100, 150) to alternating current voltage;
a first capacitor unit (104) electrically connected in series with the first coil (105);
a second capacitor unit (106) electrically connected in parallel with a series resonance circuit provided with the first coil (105) and the first capacitor unit (104); and
a control unit (120) configured to reduce capacitance of the second capacitor unit (106), with decreasing absolute value of an output current value of the first conversion circuit unit at rise or fall of output voltage of the first conversion circuit unit such that the noise caused by the rise or fall of the output voltage of the first conversion circuit unit is suppressed even if the distance between the first coil and the second coil changes.

2. The power transmitting apparatus (100, 150) according to claim 1, wherein operating frequency of a current resonance inverter including the first coil (105), the first capacitor unit (104) and the first conversion circuit unit is higher than resonance frequency of the series resonance circuit.

3. The power transmitting apparatus (100, 150) according to claim 1, wherein the second capacitor unit (106) includes a variable capacitor.

4. The power transmitting apparatus (100, 150) according to claim 1, wherein
the second capacitor unit (106) includes a plurality of capacitors having difference capacitance, and
the control unit (120) is adapted to control electrical connection of the plurality of capacitors such that the capacitance of the second capacitor unit (106) reduces with decreasing absolute value of an output current value of the first conversion circuit unit at rise or fall of output voltage of the first conversion circuit unit.

5. A power transmitting method in a power transmitting apparatus (100, 150), which transmit electric power in a wireless manner to a second coil (204) of a power receiving apparatus (200), comprising a first coil (105) disposed opposite to and at a distance from the second coil (204), said power transmitting apparatus comprising: a first conversion circuit unit, preferentially being an inverter (103), configured to convert direct current voltage inputted to said power transmitting apparatus (100, 150) to alternating current voltage; a first capacitor unit (104) electrically connected in series with the first coil (105); and a second capacitor unit (106) electrically connected in parallel with a series resonance circuit provided with the first coil (105) and the first capacitor unit (104), said power transmitting method comprising:
a control process of reducing capacitance of the second capacitor unit (106), with decreasing absolute value of an output current value of the first conversion circuit unit at rise or fall of output voltage of the first conversion circuit unit, such that the noise caused by the rise or fall of the output voltage of the first conversion circuit unit is suppressed even if the distance between the first coil and the second coil changes.

## Patentansprüche

1. Eine Leistungsübertragungsvorrichtung (100, 500), welche geeignet ist zum Übertragen elektrischer Leistung in einer drahtlosen Art und Weise zu einer zweiten Spule (204) einer Leistungsempfangsvorrichtung (200), aufweisend eine erste Spule (105), die gegenüber und in einem Abstand von der zweiten Spule (204) angeordnet ist, die Leistungsübertragungsvorrichtung (100, 500) ferner aufweisend:
eine erste Umwandlungsschaltungseinheit, die vorzugsweise ein Wechselrichter (103) ist, eingerichtet zum Umwandeln von in die Leistungsübertragungsvorrichtung (100, 500) eingespeister Gleichspannung in Wechselspannung;
eine erste Kondensatoreinheit (104), die mit der ersten Spule (105) elektrisch in Reihe geschaltet ist;
eine zweite Kondensatoreinheit (106), die mit einem Reihenresonanzschaltkreis, der mit der ersten Spule (105) und der ersten Kondensatoreinheit (104) bereitgestellt ist, elektrisch parallelgeschaltet ist; und
eine Steuereinheit (120), die eingerichtet ist, eine Kapazität der zweiten Kondensatoreinheit (106) mit einem abnehmenden Absolutwert eines Ausgangsstromwerts der ersten Umwandlungsschaltungseinheit bei einem Anstieg oder einem Abfall einer Ausgangsspannung der ersten Umwandlungsschaltungseinheit zu verringern, so dass das durch den Anstieg bzw. den Abfall der Ausgangsspannung der ersten Umwandlungsschaltungseinheit verursachte Rauschen unterdrückt wird, selbst wenn sich der Abstand zwischen der ersten Spule und der zweiten Spule verändert.

2. Die Leistungsübertragungsvorrichtung (100, 500) gemäß Anspruch 1,
wobei eine Betriebsfrequenz eines Stromresonanzwechselrichters, der die erste Spule (105), die erste Kondensatoreinheit (104) und die erste Umwandlungsschaltungseinheit aufweist, größer ist als eine Resonanzfrequenz des Reihenresonanzschaltkreises.

3. Die Leistungsübertragungsvorrichtung (100, 500) gemäß Anspruch 1,
wobei die zweite Kondensatoreinheit (106) einen variablen Kondensator aufweist.

4. Die Leistungsübertragungsvorrichtung (100, 500) gemäß Anspruch 1, wobei
die zweite Kondensatoreinheit (106) eine Vielzahl von Kondensatoren mit einer Differenzkapazität aufweist, und
die Steuereinheit (120) geeignet ist, eine elektrische Verbindung der Vielzahl von Kondensatoren derart zu steuern, dass sich die Kapazität der zweiten Kondensatoreinheit (106) mit einem abnehmenden Absolutwert eines Ausgangsstromwerts der ersten Umwandlungsschaltungseinheit bei einem Anstieg oder einem Abfall einer Ausgangsspannung der ersten Umwandlungsschaltungseinheit verringert.

5. Ein Leistungsübertragungsverfahren in einer Leistungsübertragungsvorrichtung (100, 500), welche elektrische Leistung in einer drahtlosen Art und Weise zu einer zweiten Spule (204) einer Leistungsempfangsvorrichtung (200) überträgt, aufweisend eine erste Spule (105), die gegenüber und in einem Abstand von der zweiten Spule (204) angeordnet ist, die Leistungsübertragungsvorrichtung (100, 500) aufweisend: eine erste Umwandlungsschaltungseinheit, die vorzugsweise ein Wechselrichter (103) ist, eingerichtet zum Umwandeln von in die Leistungsübertragungsvorrichtung (100, 500) eingespeister Gleichspannung in Wechselspannung; eine erste Kondensatoreinheit (104), die mit der ersten Spule (105) elektrisch in Reihe geschaltet ist; und eine zweite Kondensatoreinheit (106), die mit einem Reihenresonanzschaltkreis, der mit der ersten Spule (105) und der ersten Kondensatoreinheit (104) bereitgestellt ist, elektrisch parallelgeschaltet ist, das Leistungsübertragungsverfahren aufweisend:
einen Steuerprozess des Verringerns einer Kapazität der zweiten Kondensatoreinheit (106) mit einem abnehmenden Absolutwert eines Ausgangsstromwerts der ersten Umwandlungsschaltungseinheit bei einem Anstieg oder einem Abfall einer Ausgangsspannung der ersten Umwandlungsschaltungseinheit, so dass das durch den Anstieg bzw. den Abfall der Ausgangsspannung der ersten Umwandlungsschaltungseinheit verursachte Rauschen unterdrückt wird, selbst wenn sich der Abstand zwischen der ersten Spule und der zweiten Spule verändert.

## Revendications

1. Appareil de transmission de puissance (100, 150), adapté pour transmettre une puissance électrique sans fil à une seconde bobine (204) d'un appareil de réception de puissance (200), comprenant une première bobine (105) disposée opposée à la seconde bobine (204) et à distance de celle-ci, ledit appareil de transmission de puissance (100, 150) comprenant en outre :
une première unité circuit de conversion, de préférence un onduleur (103), configurée pour convertir une tension continue entrée dans ledit appareil de transmission de puissance (100, 150), en une tension alternative ;
une première unité condensateur (104) connectée électriquement en série avec la première bobine (105) :
une seconde unité condensateur (106) connectée électriquement en parallèle avec un circuit à résonance série constitué de la première bobine (105) et de la première unité condensateur (104) ; et
une unité de commande (120) configurée pour réduire la capacité de la seconde unité condensateur (106), avec une décroissance de la valeur absolue de la valeur d'un courant de sortie de la première unité circuit de conversion à la montée ou à la chute de la tension de sortie de la première unité circuit de conversion, de façon à supprimer le bruit provoqué par la montée ou la chute de la tension de sortie de la première unité circuit de conversion, même si la distance entre la première bobine et la seconde bobine change.

2. Appareil de transmission de puissance (100, 150) selon la revendication 1, dans lequel la fréquence de fonctionnement d'un onduleur à résonance de courant comprenant la première bobine (105), la première unité condensateur (104) et la première unité circuit de conversion, est supérieure à la fréquence de résonance du circuit à résonance série.

3. Appareil de transmission de puissance (100, 150) selon la revendication 1, dans lequel la seconde unité condensateur (106) comprend un condensateur variable.

4. Appareil de transmission de puissance (100, 150) selon la revendication 1, dans lequel la seconde unité condensateur (106) comprend une pluralité de condensateurs qui présentent des capacités différentes, et
l'unité de commande (120) est adaptée pour commander la connexion électrique de la pluralité de condensateurs, de telle sorte que la capacité de la seconde unité condensateur (106) diminue lorsque décroît la valeur absolue de la valeur du courant de sortie de la première unité circuit de conversion à la montée ou à la chute de la tension de sortie de la première unité circuit de conversion.

5. Procédé de transmission de puissance dans un appareil de transmission de puissance (100, 150), qui transmet une puissance électrique sans fil à une seconde bobine (204) d'un appareil de réception de puissance (200), comprenant une première bobine (105) disposée opposée à la seconde bobine (204) et à distance de celle-ci, ledit appareil de transmission de puissance comprenant : une première unité circuit de conversion, de préférence un onduleur (103), configurée pour convertir une tension continue entrée dans ledit appareil de transmission de puissance (100, 150), en une tension alternative ; une première unité condensateur (104) connectée électriquement en série avec la première bobine (105) ; et une seconde unité condensateur (106) connectée électriquement en parallèle avec un circuit à résonance série constitué de la première bobine (105) et de la première unité condensateur (104), ledit procédé de transmission de puissance comprenant :
un processus de commande consistant à réduire la capacité de la seconde unité condensateur (106), avec une décroissance de la valeur absolue de la valeur d'un courant de sortie de la première unité circuit de conversion à la montée ou à la chute de la tension de sortie de la première unité circuit de conversion, de façon à supprimer le bruit provoqué par la montée ou la chute de la tension de sortie de la première unité circuit de conversion, même si la distance entre la première bobine et la seconde bobine change.
